(19) Europäisches Patentamt
European Patent Office
Office européen des brevets

(11) Publication number: 0 205 313 A1

(12) # EUROPEAN PATENT APPLICATION

(21) Application number: 86304279.2

(51) Int. Cl.4: C03B 8/02 , G21F 9/16

(22) Date of filing: 04.06.86

(30) Priority: 10.06.85 US 742837

(43) Date of publication of application: 17.12.86 Bulletin 86/51

(84) Designated Contracting States: DE FR GB IT SE

(71) Applicant: WESTINGHOUSE ELECTRIC CORPORATION
Westinghouse Building Gateway Center
Pittsburgh Pennsylvania 15235(US)

(72) Inventor: Lahoda, Edward Jean
404 Morris Street
Pittsburgh Pennsylvania 15218(US)

(74) Representative: van Berlyn, Ronald Gilbert
23, Centre Heights
London, NW3 6JG(GB)

(54) **Improvements in or relating to making glass.**

(57) Method of making glass by reacting an alkoxiide of silicon, titanium, or mixtures thereof with boron oxide, boric acid, or mixture thereof to produce an alcoholic solution of a copolymer. Water is added to the solution to precipitate the copolymer and the solution is heated to evaporate the water and alcohol, and to melt the copolymer, producing the glass. Radioactive nuclear waste can be incorporated into the glass by adding it to the copolymer prior to heating it.

EP 0 205 313 A1

## IMPROVEMENTS IN OR RELATING TO MAKING GLASS

This invention relates to a method of making glass as well as to a method of immobilizing nuclear waste in glass.

Radioactive nuclear waste material is disposed of by encapculation in a stable material of low leachability, such as cement or glass. A recent advance in the encapsulation of nuclear waste in glass was the discovery that glass can be formed from solutions of metal alkoxides. The formation of glass by this route requires much lower temperatures, which reduces the volatilization of radioactive components of the nuclear waste such as ruthenium. In addition, the use of alkoxide-based glass formers results in a more homogeneous product with less volatilization of the boron and silicon constituents of the glass than does the use of conventional glass frits.

In the current method of manufacturing a boron-silicon glass from alkoxides, silicon and boron alkoxides are manufactured separately, mixed, and then hydrolyzed with water. While this process produces a good glass it is expensive because expensive ethoxides of boron and silicon must be used. While some of the silicon ethoxide can be replaced with silica flour to lower the cost somewhat, a minimum amount of silicon ethoxide is required to ensure that the boron is fully polymerized with the silicon. With this approach, the boron must be added only as the alkoxide if proper cross-linking with the silicon is to occur in the final product.

According to the present invention, a method of making glass is characterized by (A) reacting (1) an alkoxide having the general formula $M(OR)_4$, where R is alkyl from $C_1$ to $C_4$ and M is silicon, titanium or mixtures thereof, with (2) boron oxide, boric acid, or mixtures thereof, to produce an aqueous solution of a copolymer containing boron and M; (B) adding water to said solution to cross-link and precipitate said copolymer; (C) separating alcohol and water from said solution; and (D) melting said copolymer to produce said glass.

The invention also includes a method of immobilizing nuclear waste in glass characterized by reacting silicon tetrachloride with methanol to form silicon tetramethoxide, where said methanol is from 10 to 100 mole % in excess of stoichiometric; reacting, in the same reaction vessel, said silicon tetramethoxide with boron oxide to form a solution in methanol of a silicon-boron methoxide copolymer, where the amount of said boron oxide is about ±20 mole % of stoichiometric; adding water to said clear solution to cross-link and precipitate said copolymer, forming a slurry having from 40% to 60% by weight solids; heating said slurry to evaporate said methanol; adding nuclear waste to said slurry, where said nuclear waste constitutes from 10% to 50% by weight of the weight of solids in said slurry; and heating said slurry to evaporate said water and melt said copolymer, forming said glass.

A silicon-boron glass can thus be prepared from boron oxide or boric acid and a silicon alkoxide. Moreover, it is possible to use silicon methoxide, which is much less expensive than silicon ethoxide. There is eliminated the need to remove water formed from the reaction of the boron oxide or boric acid and the silicon alkoxide with an alcohol during its manufacture, thus significantly lowering the production cost. Another advantage is that the entire reaction can be carried out in a single water-cooled tank. Weight ratios of $SiO_2$ to $B_2O_3$ of about one, the ratio most desirable for the containment of nucelar waste, are easily achieved using a procedure according to the present invention.

In the first step of one embodiment of the invention, boric acid ($H_3BO_3$) or boron oxide ($B_2O_3$) is reacted with silicon or titanium alkoxide. Suitable alkoxides include the methoxides, ethoxides, propoxides and butoxides of silicon, titanium, and mixtures thereof. The methoxides are preferred as they are less expensive and more volatile and can therefore be evaporated at lower temperatures than can the other alkoxides. It is advantageous to prepare the alkoxides from the corresponding silicon or titanium halides and the corresponding alcohol according to the following reaction

$$MX_4 + 4ROH \rightarrow M(OR)_4 + 4HX\uparrow$$

In the above reaction, M is silicon or titanium, X is halide and R is alkyl from $C_1$ to $C_4$. Chlorine is the preferred halide in this reaciton because silicon and titanium tetrachlorides are inexpensive, readily available, and easier to react than other halides of those metals. The alkoxides can also be purchased or made by other means if desired. The alcohol should be used in a stoichiometric amount with the silicon or titanium halide, although excessive alcohol can be used as desired. It is, in fact, preferable to use from 10% to 100% excess alcohol so that the reaction mixture can be boiled to remove the entrained hydrochloric acid. Methanol is the preferred alcohol, of course, because it produces methoxides, the preferred alkoxides, is inexpensive, and is stable. The rêaction occurs at room temperature up to the boiling point of the alcohol. It is

normally a very rapid reaction and cooling is necessary as it is exothermic. Cooling is also advantageous because the hydrochloric acid given off is more corrosive at higher temperatures.

Boron oxide or boric acid can then be added directly to the resulting alkoxides in the same reaction vessel to produce a copolymer of silicon and boron alkoxide. While either boron oxide or boric acid can be used, boron oxide is preferred as it is available in a purer form containing less water, so that the resulting product is more stable.

The amount of boron oxide or boric acid used should be stoichiometric, plus or minus about 20 mole % of stoichiometric. If the resulting glass is to contain nuclear waste, it is preferable to use the boron oxide or boric acid in a stoichiometric amount plus or minus 5 mole % of stoichiometric.

The use of additional boron makes the resulting glass more fluid, but less corrosion resistant. The reaction of the alkoxide with the boric acid or boron oxide is complete when the boric acid or boron oxide have dissolved in the reaction mixture. The resulting product is a clear liquid, preferably of about 20 to about 40 wt.% dissolved solids. The following equation gives the reaction that occurs with boron oxide and boric acid, respectively:

$B_2O_3 + 2M(OR)_4 \rightarrow 2MBO_{1.5}(OR)_4$

$2H_3BO_3 + 2M(OR)_4 \rightarrow 2MBO_{1.5}(OR)_4 (3H_2O)$

The resulting product is a copolymer of silicon and boron alkoxide which cannot be described by any definite structural formula, but can be generally represented by structures such as the following;

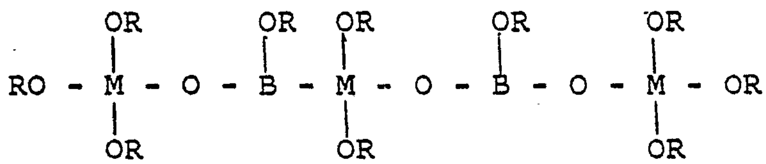

In the next step it is necessary to precipitate the copolymer from the solution. This is accomplished by the addition of water which replaces alkoxide groups, releasing alcohol, and further crosslinks the copolymer, rendering it insoluble.

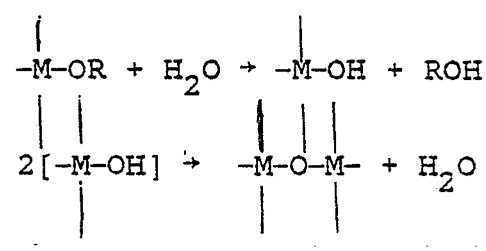

It is preferable to add excess water, so that the resulting slurry is from 40 to 60 wt.% solids.

In the next step the slurry is heated to the boiling point of the water or of the alcohol, whichever is higher, to evaporate the alcohol. Nuclear or other waste material can then be added to the slurry.

Nuclear waste material can be produced in solid or solution form but most often is produced as an aqueous slurry. It may have any pH range and any solids content, although it is preferably of a high solids content so that it is necessary to remove less water from the mixture. Nuclear waste may be at room temperature, but it is often at an elevated temperature due to internal heating from its radioactivity. The amount of waste added to the slurry should be such that the slurry contains from 10 to 50 wt.% waste on a dry solids basis and from 50 to 90 wt.% of glass on a dry solids basis. The resulting mixture is then stirred and heated to the melting point of the glass, to evaporate any water that is present and to melt the glass. The melted glass can be poured into storage containers or cooled in the vessel in which it is heated, which is then used as the storage container.

The invention will now be illustrated with reference to the following Example:

EXAMPLE

To a three-necked flask was added 71 grams of silicon tetrachloride. The flask was set in an ice bath and 530 grams of methanol were added dropwise. The evolved hydrochloric acid was vented to a sodium hydroxide solution. The flask was heated to boil off 61 grams of methanol, and 29 grams of

boron oxide was added to the solution in the flask 5 grams at a time with slow stirring. The resulting product was a clear, water-white solution. An analysis of the solution showed that it contained 5.90 wt.% silicon dioxide (12.5 grams), 5.91 wt.% boron oxide (14.5 grams), and 89 wt.% methanol (219 grams).

To the solution was added 200 grams of water. The flask was heated to boil off the methanol and some of the water to 50 wt.% solids in water (54 grams total weight). To the slurry was added 27 grams of a 50 wt.% aqueous slurry of simulated nuclear waste. The resulting mixture was heated at 1100°C for one hour to form a melt of the glass. The resulting melt was cooled to solid glass. The surface of the glass was absolutely smooth, indicating good encapsulation of the nuclear waste.

## Claims

1. A method of making glass characterized by

(A) reacting

(1) an alkoxide having the general formula M-$(OR)_4$, where R is alkyl from $C_1$ to $C_4$ and M is silicon, titanium or mixtures thereof, with

(2) boron oxide, boric acid, or mixtures thereof, to produce an aqueous solution of a copolymer containing boron and M;

(B) adding water to said solution to cross-link and precipitate said copolymer;

(C) separating alcohol and water from said solution; and

(D) melting said copolymer to produce said glass.

2. A method according to claim 1, characterized in that the precipitated copolymer is separated from the solution by heating to evaporate the water and the alcohol.

3. A method according to claim 2, characterized in that the nuclear waste is mixed with the solution prior to evaporating the water.

4. A method according to claim 1, 2 or 3, characterized in that the alcohol is methanol.

5. A method according to any of claims 1 to 4, characterized in that the alkoxide is made by reacting $MX_4$ with an alcohol, where X is halide.

6. A method according to claim 5, characterized in that the $MX_4$ is silicon tetrachloride.

7. A method according to any of claims 1 to 6, characterized in that steps (A), (B), and (C) are performed in the same container.

8. A method of immobilizing nuclear waste in glass characterized by reacting silicon tetrachloride with methanol to form silicon tetramethoxide, where said methanol is from 10 to 100 mole % in excess of stoichiometric; reacting, in the same reaction vessel, said silicon tetramethoxide with boron oxide to form a solution in methanol of a silicon-boron methoxide copolymer, where the amount of said boron oxide is about ±20 mole % of stoichiometric; adding water to said clear solution to crosss-link and precipitate said copolymer, forming a slurry having from 40% to 60% by weight solids; heating said slurry to evaporate said methanol; adding nuclear waste to said slurry, where said nuclear waste constitutes from 10% to 50% by weight of the weight of solids in said slurry; and heating said slurry to evaporate said water and melt said copolymer, forming said glass.

9. A method according to claim 8, characterized in that the amount of boron oxide is about ±5 mole % of stoichiometric/

10. A method according to claim 8 or 9, characterized in that the slurry is heated to the boiling point of water to evaporate the methanol.

European Patent Office

# EUROPEAN SEARCH REPORT

Application number

EP 86304279.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB - A - 2 041 913 (HITACHI LTD)<br>* Abstract; page 5, example 5; claims 1,5,9,12,13 *<br>-- | 1,2,4, 7 | C 03 B 8/02<br>G 21 F 9/16 |
| A | US - A - 4 422 965 (CHICKERING)<br>* Abstract; column 1, line 50 - column 3, line 60 *<br>-- | 1-4<br>7-10 | |
| A | GB - A - 1 019 373 (UNITED KINGDOM ATOMIC ENERGY AUTHORITY)<br>* Claim 1; page 9, example X; page 1, lines 27-42 *<br>---- | | |

TECHNICAL FIELDS SEARCHED (Int. Cl.4)

C 03 B
G 21 F
C 03 C

The present search report has been drawn up for all claims

| Place of search | Date of completion of the search | Examiner |
|---|---|---|
| VIENNA | 21-08-1986 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document